# EUROPÄISCHE PATENTSCHRIFT

(11) **EP 0 385 247 B1**
(45) Veröffentlichungstag und Bekanntmachung des Hinweises auf die Patenterteilung: **12.05.1993**
(21) Anmeldenummer: 90103318.3
(22) Anmeldetag: 21.02.1990
(51) Int. Cl.: C09C 1/00

(54) **Grau-schwarze Einschlusspigmente und Verfahren zu ihrer Herstellung**
Grey-black mixed-phase pigments and process for manufacturing them
Pigments à phases mixtes d'un noir grisâtre et procédé de préparation

(30) Priorität: 03.03.1989 DE 3906818
(43) Veröffentlichungstag der Anmeldung: 05.09.1990
(73) Patentinhaber: DEGUSSA AKTIENGESELLSCHAFT, 60311 Frankfurt (DE)
(72) Erfinder: Speer, Dietrich, Dr., D-6450 Hanau 9 (DE); Kiss, Akos, Dr., D-8755 Wasserlos (DE); Kleinschmit, Peter, Dr., D-6450 Hanau 9 (DE); Hanich, Jürgen, Dr., D-6000 Frankfurt 70 (DE)

(56) Entgegenhaltungen:
- DE-C- 2 143 525
- FR-A- 2 183 824

## Beschreibung

Die Erfindung betrifft grau-schwarze Einschlußpigmente auf der Basis von Zirkoniumsilikat als Hüllsubstanz, in die farbige Verbindungen als diskrete Phase eingeschlossen sind, und ein Verfahren zur Herstellung dieser Einschlußpigmente.

Einschlußpigmente sind beispielsweise aus der DE-PS 23 12 535 bekanntgeworden. Sie bestehen aus durchsichtigen Kristallen von glasurstabilen Substanzen, wie beispielsweise Zirkoniumsilikat, Zirkoniumoxid oder Zinnoxid, in die anorganische, wasserfreie, farbige Verbindungen als diskrete Phase eingeschlossen sind. Als farbige Verbindungen werden Thenardsblau, Titangelb und insbesondere Cadmiumgelb und Cadmiumrot genannt. Bekannt ist auch das Zirkoneisen-Rosa mit Fe₂O₃-Einschlüssen in einer Zirkoniumsilikathülle. Die Herstellung dieser Einschlußpigmente erfolgt durch Erhitzen der Hüllsubstanzen bzw. deren Ausgangsprodukte und der einzuschließenden farbigen Substanzen, bzw. deren Ausgangsprodukte in Anwesenheit von Mineralisatoren auf Temperaturen bis 1200° C. Allerdings hat es sich herausgestellt, daß mit diesem Verfahren nicht alle denkbaren farbigen Verbindungen in die Hüllsubstanzen in nennenswerter Ausbeute eingeschlossen werden können.

Die Palette der Grau-schwarzfarbenen Pigmente ist nicht sehr groß. Grau- und Schwarzkörper erhält man im wesentlichen aus Eisenoxiden und Chromoxiden, gegebenenfalls in Verbindung mit anderen Oxiden, wie z.B. Manganoxid, Kupferoxid, Nickeloxid oder Kobaltoxid. Grau-schwarze Einschlußpigmente sind bisher nicht bekannt geworden.

Es war daher Aufgabe der vorliegenden Erfindung grau-schwarze Einschlußpigmente aus farblosen Kristallen aus Zirkoniumsilikat, in welchen farbige Verbindungen als diskrete Phase eingeschlossen sind, zu finden und ein Verfahren zur Herstellung dieser Einschlußpigmente zu entwickeln, mit dem eine relativ hohe Ausbeute erzielbar ist.

Diese Aufgabe wurde erfindungsgemäß dadurch gelöst, daß als farbige Verbindungen Rußpartikel mit spezifischen Oberflächen (nach BET) von 10 bis 1000 m²/g, vorzugsweise 30 bis 120 m²/g, eingeschlossen sind. Bei den Rußen kann es sich um solche unterschiedlicher Herkunft, wie z. B. sogenannte Gasruße, Furnaceruße oder Flammruße, handeln.

Diese Pigmente zeigen eine graue bis schwarze Farbe, wobei unterschiedliche Farbnuancen durch unterschiedliche Einschlußmengen und Teilchengrößen der eingeschlossenen Rußpartikel eingestellt werden können.

Die neuen grau-schwarzen Einschlußpigmente sind erhältlich durch Mahlen und anschließendes Glühen eines Gemisches aus Siliziumdioxid, Zirkoniumoxid, der einzuschließenden farbigen Verbindung und Mineralisatoren bei 900 bis 1400 °C, wobei das Verfahren dadurch gekennzeichnet ist, daß man Zirkoniumoxid mit einer Korngrößenverteilung (D 50-Wert) von 7 bis 10 µm und einer spezifischen Oberfläche (geometrisch bestimmt) zwischen 2 und 4 m²/g und als einzuschließende farbige Verbindung Ruß mit einer spezifischen Oberfläche (nach BET) von 10 bis 1000 m²/g in einer Menge bis zu 50 Gew.-%, bezogen auf Zirkoniumsilikat, einsetzt, das Gemisch unter reduzierenden Bedingungen auf 900 bis 1400 °C aufheizt, dort 0,5 bis 8 Stunden glüht und dann zur Entfernung des nicht eingeschlossenen Rußanteils bei 900 bis 1400 °C unter oxidierenden Bedingungen glüht.

Vorzugsweise verwendet man Ruße mit spezifischen Oberflächen zwischen 30 und 120 m²/g, bestimmt nach der BET-Methode unter Verwendung von Stickstoff (DIN 66131 ). Es handelt sich um übliche Ruße, wie sie als Farb- oder Gummiruße im Handel erhältlich sind. Solche Ruße weisen im allgemeinen eine mittlere Primärteilchengröße nach DIN 53206 im Bereich von etwa 10 bis 100 nm auf. Vorzugsweise werden die Ruße in Mengen von 20 bis 25 Gew.-%, bezogen auf den Zirkonsilikatanteil, eingesetzt. Die Agglomeratgröße (bestimmt durch Granulometrie in Wasser) der beispielhaft eingesetzten Rußteilchen lag zwischen 1 und 15 µm; diese Kenngröße ist nicht erfindungswesentlich. Die spezifische Oberfläche der zu verwendenden Zirkoniumoxide wurde geometrisch aus der Korngrößenverteilung ermittelt.

Die Aufheizgeschwindigkeit liegt bevorzugt zwischen 800 und 1000 °C / Stunde, jedoch führten auch Aufheizraten von z. B. 200 bis 800 °C / Stunde zum Erfolg. Die optimale Aufheizrate richtet sich zum Teil auch nach dem verfügbaren Glühofen. Eine Glühtemperatur zwischen 1000 und 1300 °C wird bevorzugt.

Als Mineralisatoren verwendet man üblicherweise Alkali- oder Erdalkalihalogenide, vorzugsweise Alkali-und Erdalkalifluoride, insbesondere Magnesiumfluorid, und Alkalisilikofluoride.

Zirkoniumoxid und Siliziumdioxid werden im wesentlichen in äquivalenten Mengen eingesetzt. Das zu glühende Gemisch wird vor dem Glühprozeß gemahlen, etwa in einer Kugelmühle oder anderen Intensivmühlen. Das Glühen kann in üblichen Öfen, wie z. B. in Stempel-, Kammer- oder Durchlauföfen, erfolgen. Bei einer Glühtemperatur um 1000 °C ist eine Haltezeit um eine Stunde meist ausreichend. Man erhält auf diese Weise graue bis schwarze Produkte mit einer Ausbeute von etwa 80 %, bezogen auf die theoretisch mögliche ZrSiO₄-Bildung. Zur Entfernung des nach dem reduzierenden Glühen nicht eingeschlossenen Rußanteils wird oxidierend nachgeglüht; das oxidierende Glühen erfolgt bei 900 bis 1400 °C, wobei bei 1000 °C eine Glühzeit von etwa 0,5 bis 1 Stunde im allgemeinen ausreichend ist. Die erfindungsgemäß hergestellten Einschlußpigmente enthalten unter 0,5 Gew.-% Ruß eingeschlossen.

Diese Farbkörper zeichnen sich im Lab-Farbsystem durch farbneutrale Grautöne (a- und b-Werte nahe Null), ihre Ungiftigkeit und durch geringe Herstellungskosten aus. Sie eignen sich hervorragend zur Einfärbung von Glasuren.

Folgende Beispiele sollen das erfindungsgemäße Verfahren näher erläutern:
1. Ein Gemisch aus 26 g Zirkoniumoxid (D50-Wert = 7,6 µm; spez. Oberfläche = 3,1 m²/g), 13,8 g Siliziumdioxid, 5 g Ruß (Flammruß, spez. Oberfläche etwa 24 m²/g, Primärteilchengröße ca. 95 nm, D50-Wert 3,0 µm) mit 5 g Magnesiumfluorid als Mineralisator wird nach 15-minütiger Mahlung in Tiegeln mit Abdeckung durch eine Zuckerschicht und Tiegeldeckel eine Stunde bei 1000° C in einem Stempelofen geglüht. Die Aufheizrate betrug 950 °C/h. Anschließend wurde das zerkleinerte Produkt 1 Stunde bei 1000° C an Luft erhitzt. Das graue Produkt besaß einen L-Wert von 64,2 (L=Helligkeitswert; 100=weiß, 0=schwarz).
2. Eine Gemisch aus 26 g Zirkoniumoxid (wie Beispiel 1), 13,8 g Siliziumdioxid, 10 g Ruß (Furnace-Ruß, spez. Oberfläche 120 m²/g, Primärteilchengröße ca. 20 nm, D50-Wert 15 µm) und 2,5 g Magnesiumfluorid wird wie in Beispiel 1 geglüht. Man erhält ein graues Produkt mit einem L-Wert von 52,8.
3. Analog Beispiel 2 wird ein Furnace-Ruß mit einer spezifischen Oberfläche von etwa 60 m²/g, Primärteilchengröße ca. 40 nm, D50-Wert 1,3 µm eingesetzt. Das Produkt hatte einen L-Wert von 51,0.
4. In einem Versatz gemäß Beispiel 2 wird ein Furnace-Ruß mit einer spezifischen Oberfläche von etwa 25 m²/g verwendet. Stempelofen; Aufheizrate 950 °C / Stunde, Glühtemperatur 1000 °C, Haltezeit 1 Stunde; oxidatives Nachglühen bei 1000 °C. Das Produkt hatte einen L-Wert von 49,2.
5. Analog Beispiel 4 (Furnace-Ruß = 30 m²/g, Primärteilchengröße ca. 50 nm, D50-Wert 1,0 µm) wird ein Zirkoniumoxid mit einem D50-Wert von 9,3 µm und einer spezifischen Oberfläche von 2,1 m²/g eingesetzt. Das Produkt besaß einen L-Wert von 40,3.
6. Beispiel 4 wurde wiederholt, wobei in einem Kammerofen bei 1300 °C reduzierend geglüht wurde. Bei einer Aufheizrate von 500 °C / Stunde wurden bei einer Haltezeit von 1 Stunde und einer oxidativen Nachglühbehandlung bei 1300 °C dunkelgraue Farbkörper erhalten.
   Bei allen diesen Beispielen wurden Ausbeuten von etwa 80 % erhalten.
7. Zum Vergleich wurden Zirkoniumoxidpulver mit einem D50-Wert von 4 µm (spez. Oberfläche 5,1 m²/g), mit einem D50-Wert von 14,6 µm (spez. Oberfläche 1,8 m²/g) und im amorphen Zustand eingesetzt. Unter den gleichen Versuchsbedingungen wie in Beispiel 1 erhält man weiße Produkte ohne Rußeinschlüsse, da die Teilchengröße des verwendeten Zirkoniumoxidpulvers jeweils außerhalb der für die erfindungsgemäße Herstellung erforderlichen Teilchengrößen lag.

## Patentansprüche

1. Grau-schwarze Einschlußpigmente, bestehend aus durchsichtigen Kristallen aus Zirkoniumsilikat, in welchen farbige Verbindungen als diskrete Phase eingeschlossen sind,
dadurch gekennzeichnet,
daß als farbige Verbindungen Rußpartikel mit einer spezifischen Oberfläche (nach BET) von 10 bis 1000 m²/g eingeschlossen sind.

2. Verfahren zur Herstellung von grau-schwarzen Einschlußpigmenten gemäß Anspruch 1 durch Mahlen und anschließendes Glühen eines Gemisches aus Siliziumdioxid, Zirkoniumoxid, der einzuschließenden farbigen Verbindung und Mineralisatoren bei 900 bis 1400 °C,
dadurch gekennzeichnet,
daß man Zirkoniumoxid mit einer Korngrößenverteilung (D50-Wert) von 7 bis 10 µm und einer spezifischen Oberfläche (geometrisch bestimmt) zwischen 2 bis 4 m²/g und als einzuschließende farbige Verbindung Ruß mit einer spezifischen Oberfläche (nach BET) von 10 bis 1000 m²/g in einer Menge bis zu 50 Gew.-%, bezogen auf Zirkoniumsilikat, einsetzt, das Gemisch unter reduzierenden Bedingungen auf 900 bis 1400 °C aufheizt, dort 0,5 bis 8 Stunden glüht und dann zur Entfernung des nicht eingeschlossenen Rußanteils bei 900 bis 1400 °C unter oxidierenden Bedingungen glüht.

3. Verfahren nach Anspruch 2,
dadurch gekennzeichnet,
daß man Ruße mit spezifischen Oberflächen von 30 bis 120 m²/g in Mengen von 20 bis 25 Gew. %, bezogen auf den Zirkoniumsilikatanteil, einsetzt.

4. Verfahren nach Anspruch 2 oder 3,
dadurch gekennzeichnet,
daß die Aufheizrate bei 800 bis 1000 °C/Stunde und die Glühtemperatur bei 1000 bis 1300 °C liegt.

## Claims

1. Grey-black inclusion pigments, comprising transparent crystals of zirconium silicate in which coloured compounds are included as a discrete phase, characterized in that carbon black particles having a specific surface (in accordance with BET) of 10 to 1000 m²/g are included as the coloured compounds.

2. Process for preparing grey-black inclusion pigments according to Claim 1 by grinding and then annealing a mixture comprising silicon dioxide, zirconium oxide, the coloured compound to be included and mineralizers at 900 to 1400°C, characterized in that zirconium oxide having a particle size distribution (D50 value) of 7 to 10 µm and a specific surface (determined geometrically) of between 2 and 4 m²/g is used, and carbon black having a specific surface (in accordance with BET) of 10 to 1000 m²/g in an amount of up to 50% by weight, related to zirconium silicate, is used as the coloured compound to be included, the mixture is heated under reductive conditions to 900 to 1400°C, is annealed there for 0.5 to 8 hours, and is then annealed under oxidative conditions at 900 to 1400°C to remove the non-included carbon black portion.

3. Process according to Claim 2, characterized in that carbon black having specific surfaces of 30 to 120 m²/g is used in amounts of 20 to 25% by weight, related to the proportion of zirconium silicate.

4. Process according to Claim 2 or 3, characterized in that the rate of heating is 800 to 1000°C/hour and the annealing temperature is 1000 to 1300°C.

## Revendications

1. Pigments d'inclusion gris-noirs, constitués de cristaux transparents de silicate de zirconium, dans lesquels des composés colorés sont insérés comme phase discrète, caractérisé en ce que comme composés colorés sont insérés des particules de noir de carbone avec une surface spécifique (selon BET) de 10 à 1000 m²/g.

2. Procédé de fabrication de pigments d'inclusion gris-noirs selon la revendication 1 par broyage et calcination successive d'un mélange de dioxyde de silicium, d'oxyde de zirconium, du composé coloré à inclure et de minéralisateurs entre 900 et 1400°C, caractérisé en ce qu'on utilise de l'oxyde de zirconium avec une répartition granulométrique (valeur D50) de 7 à 10 µm et une surface spécifique (déterminée géométriquement) comprise entre 2 et 4 m²/g et comme composé coloré à inclure du noir de carbone de surface spécifique (selon BET) entre 10 et 1000 m²/g en une quantité allant jusqu'à 50 % en poids, rapportée au silicate de zirconium, on chauffe le mélange en conditions réductrices à 900 jusqu'à 1400°C, on calcine alors pendant 0,5 à 8 heures et ensuite pour éliminer la proportion de noir de carbone non incluse on calcine à 900 jusqu'à 1400°C en conditions oxydantes.

3. Procédé selon la revendication 2, caractérisé en ce qu'on utilise du noir de carbone avec des surfaces spécifique de 30 à 120 m²/g en quantités de 20 à 25 % en poids, rapportées à la proportion de silicate de zirconium.

4. Procédé selon les revendications 2 ou 3, caractérisé en ce que la vitesse de chauffage se situe de 800 à 1000°C/heure et la température de calcination de 1000 à 1300°C.
